# EUROPEAN PATENT APPLICATION

(11) **EP 4 641 591 A1**
(43) Date of publication of application: **29.10.2025**
(21) Application number: 23907095.6
(22) Date of filing: 20.12.2023
(51) Int. Cl.: H01B 7/00, C08J 9/04, C08J 9/12, C08K 5/20, C08K 5/521, C08L 27/12, H01B 3/44, H01B 7/02, H01B 11/00, H01B 11/02, H01B 13/14

(54) **FOAM MOLDING COMPOSITION, FOAM-MOLDED BODY, FOAMED ELECTRIC WIRE, MANUFACTURING METHOD FOR FOAM-MOLDED BODY, MANUFACTURING METHOD FOR ELECTRIC WIRE, AND IN-VEHICLE NETWORK CABLE**

(30) Priority: 20.12.2022 JP 2022203129
(71) Applicant: Daikin Industries, Ltd., Osaka-shi, Osaka 530-0001 (JP)
(72) Inventor: INABA, Takeshi, Osaka-shi, Osaka 530-0001 (JP)
(74) Representative: Hoffmann Eitle
(86) International application number: PCT/JP2023/045723
(87) International publication number: WO 2024/135735

(57) **Abstract**

Provided are a foam molded body and a foamed electric wire which can suitably be used as an electric wire for an in-vehicle network cable. A foam molding composition which includes a fluororesin (A), and a compound (B) having a pyrolysis temperature of 300°C or higher and a solubility parameter (SP value) of 8 to 15, and is to be used for a covering of the electric wire for an in-vehicle network cable.

## Description

### Technical Field

The present disclosure relates to a foam molding composition, a foam molded body, a foamed electric wire, a method for producing a foam molded body, a method for producing an electric wire, and an in-vehicle network cable.

### Background Art

Communication networks are widespread in offices, homes and the like, and in recent years, also in vehicles, along with the increase in communication data volume due to the adoption of automatic driving systems, and the like, faster communication speeds have been demanded, and the introduction of network cables capable of high-speed communication such as Ethernet(R) has been progressed.

Patent Literature 1 describes a shielded twisted pair cable having a twisted pair wire composed of a pair of core wires whose signal conductor peripheries are insulation covered, a conductor foil covering the outer periphery of the twisted pair wire, and a sheath insulating layer covering the outer periphery of the conductor foil, wherein at least two or more drain wires are intertwisted with the twisted pair wire.

Patent Literature 2 discloses an electric wire for an in-vehicle network cable, covered with a fluororesin.

Patent Literature 3 discloses a foam molding composition and a foamed electric wire using a fluororesin.

### Citation List

### Patent Literature

Patent Literature 1: Japanese Patent Laid-Open No. 2008-287948
Patent Literature 2: Japanese Patent Laid-Open No. 2021-158111
Patent Literature 3: Japanese Patent Laid-Open No. 2022-28640

### Summary of Invention

### Technical Problem

An object of the present disclosure is to provide a foam molded body and a foamed electric wire which can suitably be used as an electric wire for an in-vehicle network cable.

### Solution to Problem

The present disclosure is a foam molding composition which comprises a fluororesin (A) and a compound (B) having a pyrolysis temperature of 300°C or higher and a solubility parameter (SP value) of 8 to 15, and which is used for a covering of an electric wire for an in-vehicle network cable.

It is preferable that the compound (B) is a compound which comprises at least one partial structure selected from the group consisting of aromatic rings, phosphoric acid ester groups and amide groups.

It is preferable that the compound (B) is a compound containing one or more C6-14 aromatic rings, or a salt thereof.

It is preferable that the compound (B) is at least one compound selected from the group consisting of phosphoric acid esters, salts thereof, phosphoric acid ester complex compounds, and compounds having two or more amide groups.

It is preferable that the salt of the compound (B) is a salt with an alkali metal or an alkaline earth metal.

It is preferable that the compound (B) is at least one of compounds represented by the following formulae (1), (2), (3) and (4). 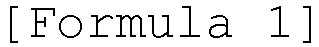 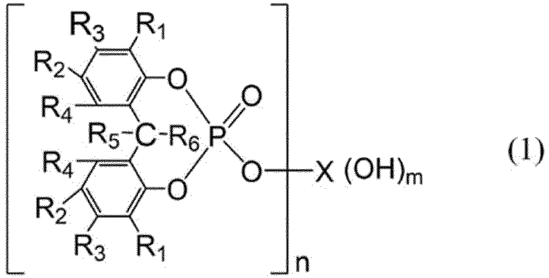 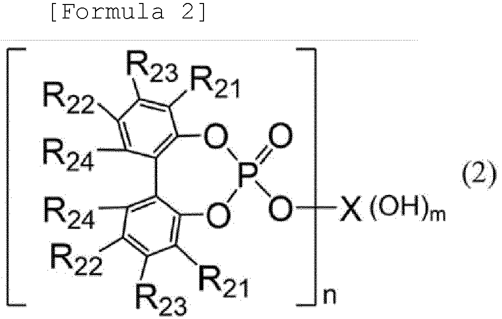 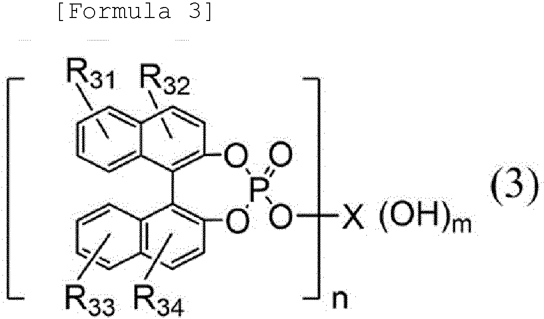 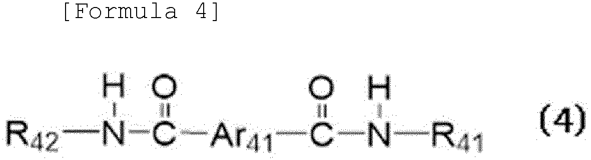 wherein R₁, R₂, R₃, R₄, R₂₁, R₂₂, R₂₃, R₂₄, R₃₁, R₃₂, R₃₃, R₃₄, R₄₁ and R₄₂ each represent a hydrogen atom, an alkyl group or cycloalkyl group having 1 to 8 carbon atoms, or an aryl group, alkylaryl group or arylalkyl group having 6 to 12 carbon atoms; Ar₄₁ represents an aryl group; R₅ and R₆ each represent a hydrogen atom or a methyl group; and n represents an integer of 1 or 2, m represents an integer of 0 to 2, and X represents a m+n-valent metal.

It is preferable that R₁, R₂, R₂₁, R₂₂, R₃₁ and R₃₃ in the formulae (1), (2) and (3) are each an alkyl group having 1 to 8 carbon atoms.

It is preferable that X in the formulae (1), (2) and (3) is at least one among sodium, potassium, rubidium, calcium and barium.

It is preferable that the compound (B) is an aromatic cyclic phosphoric acid ester salt represented by the above formula (1).

It is preferable that the above compound (B) is 2,2'-methylenebis(4,6-di-t-butylphenyl) sodium phosphate.

It is preferable that the fluororesin (A) is a melt processable fluororesin.

It is preferable that the fluororesin (A) is at least one selected from the group consisting of tetrafluoroethylene/hexafluoropropylene-based copolymers, tetrafluoroethylene/perfluoro(alkyl vinyl ether) copolymers and tetrafluoroethylene/ethylene-based copolymers.

It is preferable that the fluororesin (A) is a fluororesin having been subjected to a fluorination treatment.

It is preferable that the foam molding composition of the present disclosure is substantially free from fluorine-based low-molecular weight compound.

The present disclosure is also a foam molded body characterized in being obtained from the above-mentioned foam molding composition.

It is preferable that the foam molded body is substantially free from fluorine-based low-molecular weight compound.

The present disclosure is also a foamed electric wire for an in-vehicle network cable characterized in comprising a core wire and a covering material covering the core wire and obtained from the foam molding composition. It is preferable that the foamed electric wire is substantially free from fluorine-based low-molecular weight compound.

The present disclosure is also a foamed electric wire for an in-vehicle network cable, characterized in having a core wire and a fluororesin layer or a fluororesin composition layer covering the core wire,
wherein the fluororesin layer or the fluororesin composition layer contains cells; and
wherein, in observation of a cut surface perpendicular to the lengthwise direction of the foamed electric wire, the average cell size of the cells is 20 to 40 µm.

The present disclosure is also a foamed electric wire for an in-vehicle network cable, characterized in having a core wire and a fluororesin layer or a fluororesin composition layer covering the core wire,
wherein the fluororesin layer or the fluororesin composition layer has cells; and
wherein, in observation of a cut surface parallel to the lengthwise direction of the foamed electric wire, the average aspect ratio of the cells is 1.9 or lower.

The present disclosure is also a foamed electric wire for an in-vehicle network cable characterized in having a core wire and a fluororesin layer or a fluororesin composition layer covering the core wire, wherein the fluororesin layer or the fluororesin composition layer contains cells, wherein the presence proportion of cells having an aspect ratio of 3 or higher is 13% or lower with respect to the total amount of cells measured in the observation of the cut surface parallel to the lengthwise direction of the foamed electric wire, in observation of a cut surface parallel to the lengthwise direction of the foamed electric wire.

The present disclosure is also a foamed electric wire for an in-vehicle network cable characterized in having a core wire and a fluororesin layer or a fluororesin composition layer covering the core wire, wherein the fluororesin layer or the fluororesin composition layer contains cells, wherein the standard deviation of the aspect ratios of the cells is 1.3 or lower, in observation of a cut surface parallel to the lengthwise direction of the foamed electric wire.

The present disclosure is also a foamed electric wire for an in-vehicle network cable characterized in having a core wire and a fluororesin layer or a fluororesin composition layer covering the core wire, wherein the fluororesin layer or the fluororesin composition layer contains cells, wherein the foaming ratio is 20% or higher and the surface roughness is smaller than 5.0 µm.

The present disclosure is also a foamed electric wire for an in-vehicle network cable, characterized in having a core wire and a fluororesin layer or a fluororesin composition layer covering the core wire,
wherein the fluororesin layer or the fluororesin composition layer has cells; and
wherein the electric wire has a foam (inner side)/skin (outer side) structure.

The present disclosure is also a method for producing a foam molded body, characterized in comprising foam molding the foam molding composition.

The present disclosure is also a method for producing an electric wire, characterized in comprising covering a core wire with the foam molding composition to obtain the electric wire.

The present disclosure is also an in-vehicle network cable characterized in comprising the above foamed electric wire for an in-vehicle network cable.

The in-vehicle network cable has a twisted pair cable having a pair of electric wires mutually twisted, and it is preferable that at least one of the pair of electric wires is the above foamed electric wire for an in-vehicle network cable.

In the in-vehicle network cable, it is preferable that in the twisted pair cable, the deformation rate of the foamed electric wire after twisting is 20% or lower.

### Description of embodiments

The present disclosure has been completed by a finding that the use of a specific compound (B) in a foaming resin containing a fluorine-based polymer as a base resin enables good foaming to be provided, and the foaming resin can suitably be used, in particular, in an electric wire for an in-vehicle network cable.

The compound (B) has a pyrolysis temperature of 300°C or higher and a solubility parameter (SP value) of 8 to 15. Many conventional foam nucleating agents have a relatively low pyrolysis temperature and melting point. Although the case where the molding temperature of a resin is low nevertheless poses no problem, in a molding composition containing a resin having a high melting point, there is such a problem that the foam nucleating agent is pyrolyzed or melted during the molding process and does not efficiently act as a foam nucleating agent. In particular, in the case of using a fluororesin being a high-melting point resin, there occur disadvantages including the coloring and the generation of decomposed gas, the gigantic enlargement of the cell size, the worsening of the surface condition and the deterioration of electric characteristics, making it difficult for both of physical properties of the fluororesin and characteristics as a foam molded body to be simultaneously satisfied.

The present disclosure signifies that it has been found that the use of the compound (B) leads to exhibition of good foamability of a composition containing the fluororesin (A), and further, good characteristics are exhibited even in the case of molding at high temperatures, so that the above-mentioned advantageous effects can be attained.

Hereinafter, the present disclosure will be described in detail.

The fluororesin (A) is not limited as long as being melt processable, and examples thereof include tetrafluoroethylene (TFE)/hexafluoropropylene (HFP)-based copolymers, TFE/perfluoro(alkyl vinyl ether) (PAVE) copolymers, TFE/ethylene-based copolymers [ETFE], chlorotrifluoroethylene (CTFE)/ethylene copolymers [ECTFE], polyvinylidene fluoride [PVdF], polychlorotrifluoroethylene [PCTFE], TFE/vinylidene fluoride (VdF) copolymers [VT], polyvinyl fluoride [PVF], TFE/VdF/CTFE copolymers [VTC], TFE/ethylene/HFP copolymers and TFE/HFP/VdF copolymers.

Examples of the PAVE include perfluoro(methyl vinyl ether) [PMVE], perfluoro(ethyl vinyl ether) [PEVE] and perfluoro (propyl vinyl ether) [PPVE]. Among these, PPVE is preferable. These can be used singly in one kind or in two or more kinds.

The fluororesin may be one having a polymerization unit based on another monomer in an amount in the range of not impairing the intrinsic property of the fluororesin. The another monomer can suitably be selected from, for example, TFE, HFP, ethylene, propylene, perfluoro(alkyl vinyl ether), perfluoroalkylethylene, hydrofluoroolefin, fluoroalkylethylene, or perfluoro(alkyl allyl ether). It is preferable that the perfluoroalkyl group constituting the another monomer has 1 to 10 carbon atoms.

The fluororesin is preferably a TFE/HFP-based copolymer, a TFE/PAVE copolymer or a TFE/ethylene-based copolymer, and more preferably a TFE/HFP-based copolymer or a TFE/PAVE copolymer, since these have excellent heat resistance. The fluororesin may be used concurrently in two or more kinds thereof. The fluororesin is preferably also a perfluororesin, since it has better electric characteristics.

In the TFE/HFP-based copolymer, TFE/HFP is, in mass ratio, preferably 80 to 97/3 to 20 and more preferably 84 to 92/8 to 16.

The TFE/HFP-based copolymer may be a binary copolymer composed of TFE and HFP, or may also be a ternary copolymer composed of TFE and HFP and a comonomer copolymerizable therewith (for example, TFE/HFP/PAVE copolymer).

It is also preferable that the TFE/HFP-based copolymer is a TFE/HFP/PAVE copolymer containing a polymerization unit based on PAVE.

In the TFE/HFP/PAVE copolymer, TFE/HFP/PAVE is, in mass ratio, preferably 70 to 97/3 to 20/0.1 to 10 and more preferably 81 to 92/5 to 16/0.3 to 5.

In the TFE/PAVE copolymer, TFE/PAVE is, in mass ratio, preferably 90 to 99/1 to 10 and more preferably 92 to 97/3 to 8.

In the TFE/ethylene-based copolymer, TFE/ethylene is, in molar ratio, preferably 20 to 80/20 to 80 and more preferably 40 to 65/35 to 60. Then, the TFE/ethylene-based copolymer may contain another monomer component.

That is, the TFE/ethylene-based copolymer may be a binary copolymer composed of TFE and ethylene, or may also be a ternary copolymer composed of TFE and ethylene and a comonomer copolymerizable therewith (for example, TFE/ethylene/HFP copolymer).

It is also preferable that the TFE/ethylene-based copolymer is a TFE/ethylene/HFP copolymer containing a polymerization unit based on HFP. In the TFE/ethylene/HFP copolymer, TFE/ethylene/HFP is, in molar ratio, preferably 40 to 65/30 to 60/0.5 to 20 and more preferably 40 to 65/30 to 60/0.5 to 10.

The melt flow rate (MFR) of the fluororesin is preferably 0.1 to 500 g/10 min, more preferably 4 to 100 g/10 min and still more preferably 10 to 80 g/10 min; and the MFR is further still more preferably 34 to 50 g/10 min and especially preferably 35 to 40 g/10 min, since the generation of sparks can be suppressed and the foaming ratio becomes high.

The MFR is a value measured according to ASTM D-1238 by using a die of 2.1 mm in diameter and 8 mm in length at a load of 5 kg and 372°C.

The fluororesin can be synthesized by polymerizing monomer components by a usual polymerization method, for example, emulsion polymerization, suspension polymerization, solution polymerization, bulk polymerization or gas phase polymerization. In the polymerization reaction, a chain transfer agent such as methanol may be used in some cases. The fluororesin may be produced by polymerization and isolation without using a metal ion-containing reagent.

The fluororesin may be one in which sites of at least one of the polymer main chain and polymer side chains have terminal groups such as -CF₃ and -CF₂H, and is not limited, but is preferably a fluororesin having been subjected to fluorination treatment. Fluororesins having been subjected to no fluorination treatment have terminal groups (hereinafter, such terminal groups are referred also as "unstable terminal groups") unstable thermally and electrically, such as -COOH, -CH₂OH, -COF and -CONH₂, in some cases. Such unstable terminal groups can be lessened by the fluorination treatment. It is preferable that the fluororesin contains few or none of the unstable terminal groups, and it is more preferable that the number of the total of the unstable terminal groups of the above four kinds and the -CF₂H terminal group is 50 or less per 1 × 10⁶ carbon atoms. When the number exceeds 50, there arises a risk of occurrence of molding failure. The number of the unstable terminal groups is more preferably 20 or less and still more preferably 10 or less. In the present description, the number of the unstable terminal groups is a value obtained by infrared absorption spectrometry. It may also be that the unstable terminal groups and the -CF₂H terminal group are not present and all are -CF₃ terminal groups.

The fluorination treatment can be carried out by bringing a fluororesin having been subjected to no fluorination treatment into contact with a fluorine-containing compound.

The fluorine-containing compound is not limited, but includes fluorine radical sources which generate fluorine radicals under a fluorination treatment condition. The fluorine radical sources include F₂ gas, CoF₃, AgF₂, UF₆, OF₂, N₂F₂, CF₃OF and halogen fluorides (for example, IF₅ and ClF₃).

The fluorine radical source such as F₂ gas may be one having a concentration of 100%, but from the viewpoint of safety, it is preferable to use the fluorine radical source by being mixed with an inert gas to be diluted therewith to 5 to 50% by mass, preferably 15 to 30% by mass. The inert gas includes nitrogen gas, helium gas and argon gas, but nitrogen gas is preferable from the economical viewpoint.

The condition of the fluorination treatment is not limited, and a fluororesin in a melted state may be brought into contact with a fluorine-containing compound, but the fluorination treatment can be carried out usually at a temperature equal to or lower than the melting point of the fluororesin, preferably at a temperature of 20 to 220°C, more preferably 100 to 200°C. The fluorination treatment is carried out usually for 1 to 30 hours, preferably for 5 to 20 hours.

It is preferable that the fluorination treatment involves bringing a fluororesin having been subjected to no fluorination treatment into contact with fluorine gas (F₂ gas).

The fluororesin (A) is not limited, but it is desirable that: the melting point of the fluororesin (A) is 200°C or higher; the molding temperature is 250°C or higher; and the pyrolysis temperature is 300°C or higher, since there can be obtained a foam molded body excellent in heat resistance and having a wide continuous use temperature range from the fluororesin (A). Further, the melting point is more preferably 250°C or higher, and preferably 300°C or lower. The molding temperature is more preferably 300°C or higher, and preferably 450°C or lower. The pyrolysis temperature is more preferably 350°C or higher and still more preferably 400°C or higher. The upper limits of the melting point, the molding temperature and the pyrolysis temperature are 600°C or lower.

In the present description, the melting point is a temperature measured by a differential scanning calorimeter (DSC); the molding temperature is a usually recommended temperature suitable for molding, and the temperature at which the fluororesin (A) has flowability and no resin deterioration such as coloring occurs; and the pyrolysis temperature is a 1%-weight loss temperature when the fluororesin (A) is heated in air at 10°C/min in TG (heat weight change measurement). Provided that there is excluded the weight loss amount by volatilization of water contained and crystal water occurring at between 100°C and 200°C. The "having flowability" means that the MFR at the temperature is 0.0001 or higher.

In order to reduce the signal loss of communication electric wires, the dielectric constant of the fluororesin (A) is preferably 3.0 or lower, more preferably 2.6 or lower and most preferably 2.1 or lower. The lower limit is 1.0 or higher. Similarly, the dielectric loss tangent is preferably 0.01 or less, more preferably 0.001 or lower and most preferably 0.0004 or lower. The lower limit is 0.0001 or higher. The dielectric constant and the dielectric loss tangent are measured by a cavity resonator method at a frequency of 6 GHz.

The content of the fluororesin (A) is, with respect to 100 parts by mass of the foam molding composition, preferably 50 parts by mass or higher, more preferably 80 parts by mass or higher, still more preferably 90 parts by mass or higher, further still more preferably 95 parts by mass or higher and especially preferably 98 parts by mass or higher. The upper limit is 99.999 parts by mass or lower and more preferably 99.99 parts by mass or lower.

The compound (B) acting as a foam nucleating agent in the present disclosure is a compound having a pyrolysis temperature of 300°C or higher and a solubility parameter (SP value) of 8 to 15.

In the present disclosure, it is needed that the pyrolysis temperature of the compound (B) is 300°C or higher, since there can be obtained a foam molded body excellent in heat resistance and having a wide continuous use temperature range. The pyrolysis temperature is more preferably 350°C or higher and still more preferably 400°C or higher. The upper limit is preferably 600°C or lower.

The measurement of the pyrolysis temperature can be carried out as in the above-mentioned fluororesin (A).

In order to effectively exhibit the advantageous effects of the present disclosure, it is desirable that the compound (B) is not melted at the molding temperature. Hence, the melting point of the compound (B) is preferably 200°C or higher, more preferably 300°C or higher, further, more preferably 350°C or higher and most preferably 400°C or higher. The melting point of the compound (B) is a temperature which can be ascertained by a TGA peak in TG measurement, and for example, in the case where no peak can be observed at 400°C or lower, it is conceivable that the melting point is 400°C or higher.

Whether or not the compound is melted at the peak temperature is checked by use in combination of observation by a heating microscope or in an electric furnace, or the like.

The solubility parameter (SP value) of the compound (B) is 8 to 15. Due to that the SP value is in the above range, the additive particles can be dispersed homogeneously, whereby foaming can be carried out uniformly and finely. Further, such an effect can be attained that there is suppressed the generation of gigantic particles by reaggregation of the particles in foam molding, whereby there are reduced irregularities on the electric wire surface caused by the gigantic particles and the surface can be made smooth.

The SP value is preferably 9 or higher and more preferably 10 or higher. Then, the SP value is preferably 14 or lower, more preferably 13 or lower and still more preferably 12 or lower.

The SP value can be determined by the Fedors expression (Polym. Eng. Sci., 14[2], 147(1974)).

It is preferable that the compound (B) is a compound which comprises at least one partial structure selected from the group consisting of aromatic rings, phosphoric acid ester groups and amide groups. For example, in the case where the compound (B) contains aromatic rings, it is preferable that the compound (B) is a compound containing one or more C6-14 aromatic rings, or a salt thereof.

In the case where the compound (B) contains an amide group(s), it is preferable that the compound (B) is a compound having two or more amide groups. Such a compound is not limited, and for example, a compound represented by the following formula (4) is preferable.

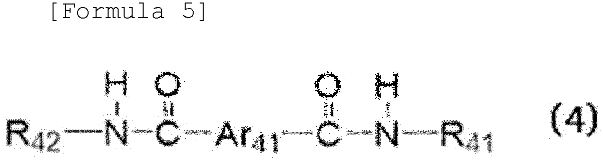

In the formula, R₄₁ and R₄₂ each represent a hydrogen atom, an alkyl group or cycloalkyl group having 1 to 8 carbon atoms, or an aryl group, alkylaryl group or arylalkyl group having 6 to 12 carbon atoms; and Ar₄₁ represents an aryl group.

The compound more specifically includes N,N'-dicyclohexyl-2,6-naphthalenedicarboxamide (trade name: NJSTAR NU-100, New Japan Chemical Co., Ltd.).

In the case where the compound (B) contains a phosphoric acid ester group, it is preferable that the compound (B) is at least one compound selected from the group consisting of phosphoric acid esters and salts thereof and phosphoric acid ester complex compounds. A phosphoric acid ester compound usable as the compound (B) is representatively a phosphoric acid ester, a phosphorous acid ester, an acidic phosphate ester, an acidic phosphite ester or a salt thereof with ammonia, an amine, melamine, an alkali metal, an alkaline earth metal or the like, and the specific structure thereof is not limited.

Specific examples thereof include acidic phosphate esters or acidic phosphite esters, such as triphenyl phosphate, trilauryl phosphate, tristearyl phosphate, trioleyl phosphate, xylene diphenyl phosphate, ethyl diphenyl phosphate, isopropyl diphenyl phosphate, n-butyl diphenyl phosphate, 2-ethylhexyl diphenyl phosphate, isodecyl diphenyl phosphate, cetyl diphenyl phosphate, stearyl diphenyl phosphate, oleyl diphenyl phosphate, butyl dicresyl phosphate, octyl dicresyl phosphate, lauryl dicresyl phosphate, dibutyl pyrophosphate, monophenyl acid phosphate, diphenyl acid phosphate, monocresyl acid phosphate, dicresyl acid phosphate, monoxylenyl acid phosphate, 2-acryloyloxyethyl acid phosphate, 2-methacryloyloxyethyl acid phosphate, diphenyl (2-acryloyloxyethyl) phosphate, diphenyl (2-methacryloyloxyethyl) phosphate, trinaphthyl phosphate, trinonylphenyl phosphate, tris(2,6-dimethylphenyl) phosphate, tetraphenyl resorcinol diphosphate, tetraphenyl hydroquinone diphosphate, tetraphenyl bisphenol A diphosphate, tetra(2,6-dimethylphenyl) resorcinol diphosphate, tetra(2,6-dimethylphenyl) bisphenol A diphosphate, tetra(2,6-dimethylphenyl) biphenyl diphosphate, tetraphenylethylene glycol diphosphate, bis(2,6-dimethylphenyl) pentaerythritol diphosphate and dixylenyl acid phosphate, and salts of acidic phosphate esters or acidic phosphite esters with ammonia, an amine, a melamine, an alkali metal or an alkaline earth metal, such as ammonium salts of dimethyl phosphate, diethyl phosphate, ethyl phosphate and di-n-butyl phosphate, a triethanolamine salt of dibutoxyethyl phosphate, a morpholine salt of dioctyl phosphate, soda salts of mono-n-butyl phosphate, an ammonium salt of diphenyl phosphate, a melamine salt of diphenyl phosphate, a piperazine salt of diphenyl phosphate, ammonium salts of phenyl phosphate, an ethylenediamine salt of dicresyl phosphate, soda salts of cresyl phosphate and a melamine salt of dixylenyl phosphate.

More specific examples include salts of phosphoric acid esters, such as bis(4-t-butylphenyl) sodium phosphate and 2,2'-methylenebis(4,6-di-t-butylphenyl) sodium phosphate, and a sodium salt of 2-hydroxy-2-oxo-4,6,10,12-tetra-t-butyl-1,3,2-dibenzo[d,g]perhydrodioxaphosphocin, a barium salt of bisphenol phosphoric acid diester, a sodium salt of binaphthyl phosphoric acid diester and bis(4-nitrophenyl) sodium phosphate. Then, the ester may be a mono-ester, a di-ester, a tri-ester or a more poly-ester. These may be used singly in one kind or in a combination of two or more kinds.

Above all, aromatic phosphoric acid esters are preferable; salts of aromatic phosphoric acid esters are more preferable; and salts of aromatic phosphoric acid esters having a cyclic structure are still more preferable. More preferably, the salts of aromatic phosphoric acid esters having a cyclic structure are salts of cyclic phosphoric acid esters having a biphenyl structure, a binaphthyl structure or a benzhydryl structure. Here, these benzene rings and naphthalene rings may have an alkyl group or cycloalkyl group having 1 to 8 carbon atoms, or an aryl group, alkylaryl group or arylalkyl group having 6 to 12 carbon atoms.

As the salts of aromatic phosphoric acid ester having the cyclic structure, at least one selected from the group consisting of aromatic cyclic phosphoric acid ester salts represented by the following formulae (1), (2) and (3) is preferable.

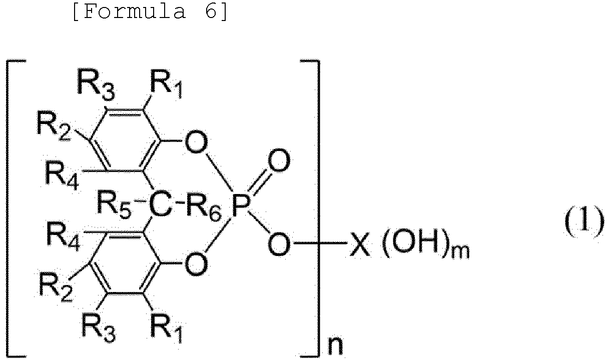

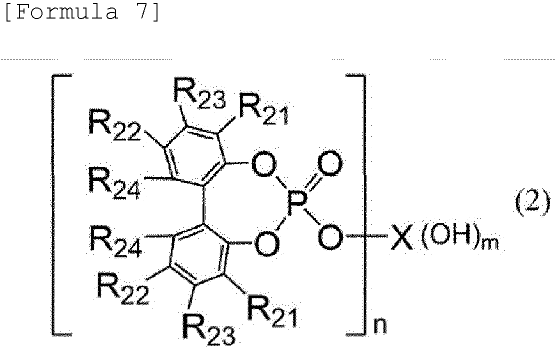

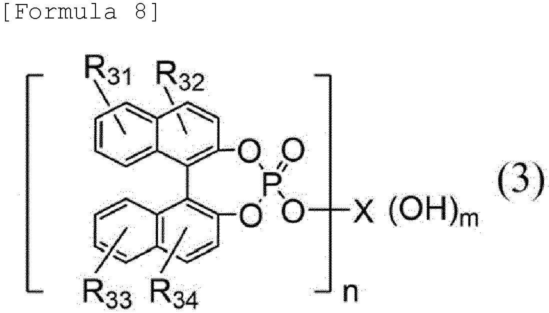

In the formula, R₁, R₂, R₃, R₄, R₂₁, R₂₂, R₂₃, R₂₄, R₃₁, R₃₂, R₃₃ and R₃₄ each represent a hydrogen atom, an alkyl group or cycloalkyl group having 1 to 8 carbon atoms, or an aryl group, alkylaryl group or arylalkyl group having 6 to 12 carbon atoms; R⁵ and R⁶ each represent a hydrogen atom or a methyl group; n represents an integer of 1 or 2; m represents an integer of 0 to 2; and X represents a m+n-valent metal.

Examples of the alkyl groups represented by R₁, R₂, R₃, R₄, R₂₁, R₂₂, R₂₃, R₂₄, R₃₁, R₃₂, R₃₃ and R₃₄ include methyl, ethyl, propyl, isopropyl, butyl, isobutyl, secbutyl, tert-butyl, amyl, isoamyl, sec-amyl, tert-amyl, hexyl, isohexyl, heptyl, octyl, isooctyl, 2-ethylhexyl and tert-octyl. The cycloalkyl groups include cyclopentyl, cyclohexyl and cycloheptyl. Among these, alkyl groups having 1 to 4 carbon atoms, and a t-butyl group are preferable.

The aryl groups represented by R₁, R₂, R₃, R₄, R₂₁, R₂₂, R₂₃, R₂₄, R₃₁, R₃₂, R₃₃ and R₃₄ include phenyl, naphthyl and biphenyl. The alkylaryl groups include 4-methylphenyl, 4-tert-butylphenyl and nonylphenyl. The arylalkyl groups include benzyl, phenethyl and cumyl.

The metal represented by X includes alkali metals such as lithium, sodium, potassium and rubidium, alkaline earth metals such as magnesium calcium and barium, and aluminum, zinc and titanium. Among these, at least one among sodium, potassium, rubidium, calcium and barium are preferable; and sodium or barium is more preferable.

Above all, it is preferable that the compound (B) is an aromatic cyclic phosphoric acid ester salt represented by the above formula (1), and more specifically, 2,2'-methylenebis(4,6-di-t-butylphenyl) sodium phosphate represented by the following formula (5) is most preferable.

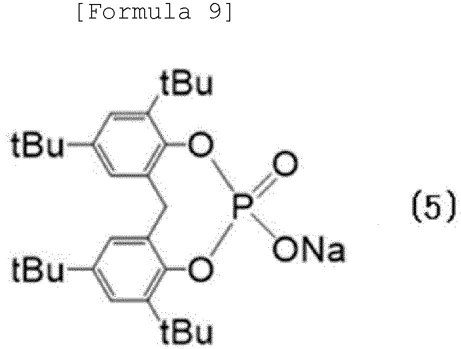

The phosphoric acid ester complex compound usable as the compound (B) is a complex composed of a metal and an organic compound having a phosphoric acid ester, and a specific structure thereof is not limited. Examples of the organic compound constituting the complex compound include bis(4,4',6,6'-tetra-t-butyl-2,2'-methylene-diphenyl phosphate, 2,2'-methylene-bis(4,6-di-t-butylphenyl) phosphate, 2,2'-methylene-bis(4,6-dimethylphenyl) phosphate, 2,2'-methylene-bis(4,6-dimethylphenyl) phosphate, 2,2'-methylene-bis(4,6-diethylphenyl) phosphate, 2,2'-methylene-bis(4-methyl-6-t-butylphenyl) phosphate, 2,2'-methylene-bis(4-ethyl-6-t-butylphenyl) phosphate, 2,2'-ethylidene-bis(4,6-di-t-butylphenyl) phosphate, 2,2'-ethylidene-bis(4-i-propyl-6-t-butylphenyl) phosphate, 2,2'-ethylidene-bis(4-m-butyl-6-t-butylphenyl) phosphate, 2,2'-butylidene-bis(4,6-dimethylphenyl) phosphate, 2,2'-butylidene-bis(4,6-di-t-butylphenyl) phosphate, 2,2'-t-octylmethylene-bis(4,6-dimethylphenyl) phosphate, 2,2'-t-octylmethylene-bis(4,6-di-t-butylphenyl) phosphate, bis[2,2'-thiobis(4-ethyl-6-t-butylphenyl) phosphate], bis[2,2'-thiobis-(4,6-di-t-butylphenyl) phosphate], bis[2,2'-thiobis-(4-t-octylphenyl) phosphate], bis[2,2'-methylene-bis(4,6-di-t-butylphenyl) phosphate], bis[2,2'-ethylidene-bis(4,6-dit-butylphenyl) phosphate], bis[(4,4'-dimethyl-6,6'-di-t-butyl-2,2'-biphenyl) phosphate], (4,4'-dimethyl-5,6'-dit-butyl-2,2'-biphenyl) phosphate, tris[2,2'-methylene-bis(4,6-di-t-butylphenyl) phosphate], tris[2,2'-ethylidene-bis(4,6-di-t-butylphenyl) phosphate], phenyl bisdodecyl phosphate, phenyl ethyl hydrogen phosphate, phenyl bis(3,5,5-trimethylhexyl) phosphate, ethyl diphenyl phosphate, 2-ethylhexyl di(tolyl) phosphate, diphenyl hydrogen phosphate, methylene diphenyl phosphate, bis(2-ethylhexyl) p-tolyl phosphate, tritolyl phosphate, bis(2-ethylhexyl) phenyl phosphate, di(nonyl) phenyl phosphate, phenyl methyl hydrogen phosphate, di(dodecyl) p-tolyl phosphate, p-tolyl bis(2,5,5-trimethylhexyl) phosphate, 2-ethynylhexyl diphenyl phosphate, tri(butoxyethyl) phosphate, trioctyl phosphate, tricresyl phosphate, cresyl diphenyl phosphate, diethyl chlorophosphate, diphenyl chlorophosphate, diethyl bromophosphate, diphenyl bromophosphate, dimethyl chlorophosphate, phenyl chlorophosphate, trimethyl phosphate, triethyl phosphate, tri-n-butyl phosphate, tridecyl phosphate, triphenyl phosphate, isopropyl triphenyl phosphate, isodecyl diphenyl phosphate and methylene diphenyl phosphate.

Then, examples of the metal constituting the phosphoric acid ester complex compound include aluminum, sodium, lithium, calcium, magnesium and barium. These may be used singly in one kind or in a combination of two or more kinds. Among these, aromatic phosphoric acid esters are preferable; cyclic aromatic phosphoric acid esters are still more preferable; and sodium complex compounds of aromatic cyclic phosphoric acid esters are most preferable.

Among the above-mentioned compounds (B), examples of compounds having a melting point of 300°C or higher include 2,2'-methylenebis(4,6-di-t-butylphenyl) sodium phosphate.

The content of the compound (B) is, with respect to the fluororesin (A), preferably 20 parts by mass or lower, more preferably 10 parts by mass or lower, still more preferably 5 parts by mass or lower, further still more preferably 2 parts by mass or lower and especially preferably 1.5 parts by mass or lower.

The content of the compound (B) is, with respect to the fluororesin (A), preferably 0.001 part by mass or higher and more preferably 0.01 part by mass or higher.

When the content of the compound (B) is too low, it becomes difficult for a covering material to be obtained to be provided with fine cells; and when too high, there arises such a risk that sparks are often generated.

Alternatively, the foam molding composition of the present disclosure may further contain a boron nitride in the range of not impairing the advantageous effects of the present disclosure.

The average particle size of the boron nitride is preferably 8.0 µm or larger. Conventionally, the average particle size of boron nitride is likely to be made small and use of boron nitride having a relatively large average particle size has not been studied specifically.

Due to that the foam molding composition of the present disclosure contains boron nitride having an average particle size in the above specific range, there can be formed a foamed electric wire equipped with a covering material having a smaller average cell size and a high foaming ratio.

The average particle size of the boron nitride is more preferably 9.0 µm or larger, still more preferably 10.0 µm or larger, further still more preferably 10.5 µm or larger, especially preferably 11.0 µm or larger, especially more preferably 12.0 µm or larger and most preferably 13.0 µm or larger.

When the average particle size of the boron nitride is too large, there arise such a risk that the average cell size becomes large and such a risk that sparks are often generated. The average particle size of the boron nitride is preferably 25 µm or smaller and more preferably 20 µm or smaller.

Due to that the average particle size of the boron nitride is in the above range, a covering material having fine and uniform cells can be formed.

The average particle size of the boron nitride is a value determined by using a laser diffraction/scattering particle size distribution analyzer. In the case of using a wet method, a medium may appropriately be selected, but for example, methanol or the like may be used.

The particle size distribution in terms of (D84-D16)/D50 of the boron nitride is preferably 1.2 or lower.

With regard to the particle size distribution, when a cumulative curve is determined with the total volume of a powder mass of the boron nitride being taken to be 100%, D84, D50 and D16 represent, respectively, a particle size (µm) of a point of the cumulative curve which indicates 84%, a particle size (µm) of a point thereof which indicates 50% and a particle size (µm) of a point thereof which indicates 16%. Here, the cumulation of the particle size distribution is carried out from the small particle size side. The total volume of the powder mass can be obtained by preparing a sample in which the powder of the boron nitride is dispersed in a medium such as methanol, and using a laser diffraction/scattering particle size distribution analyzer (for example, Microtrack MT3300, manufactured by Nikkiso Co., Ltd.).

Due to that the particle size distribution of the boron nitride is in the above range, a covering material having fine and uniform cells can be formed and generation of sparks can be suppressed more.

The particle size distribution is more preferably 1.1 or less and still more preferably 1.0 or lower. The lower limit of the particle size distribution is not limited, but may be, for example, 0.1.

The cumulative curve of the particle size distribution (volumetric particle size distribution) is obtained by using a laser diffraction/scattering particle size distribution analyzer (for example, Microtrack MT3300, manufactured by Nikkiso Co., Ltd.). In the case of using a wet method, a medium may appropriately be selected, but for example, methanol or the like may be used.

It is preferable that the boron nitride is a pulverized one. When the boron nitride is a pulverized one, generation of sparks can be suppressed more.

The pulverization can be carried out by a method and condition by which the average particle size and the particle size distribution of the boron nitride can be made to be in the above ranges. The pulverization is carried out by appropriately selecting the kind and the condition of a pulverizer. The pulverizer may be, for example, a jet mill, a hammer mill, a ball mill, a pin mill or the like.

The boron nitride may be regulated to the average particle size or the particle size distribution in the above range by being classified.

The composition of the present disclosure is not limited, but the content of the boron nitride is preferably 0.1 to 10% by mass, more preferably 0.1 to 2.0% by mass, still more preferably 0.1 to 1.5% by mass and further still more preferably 0.1 to 1.0% by mass. When the content of the boron nitride is too low, there arises such a risk that it becomes difficult for a covering material of a foamed electric wire to be obtained to be provided with fine cells; when too high, there arises such a risk that the production cost becomes high.

Alternatively, the foam molding composition of the present disclosure may further contain a polyatomic anion-containing inorganic salt in the range of not impairing the advantageous effects of the present disclosure.

The polyatomic anion-containing inorganic salt includes one disclosed in U.S. Patent No. 4,764,538.

Alternatively, the foam molding composition of the present disclosure may further contain sulfonic acid, phosphonic acid or salts thereof, zeolite and the like in the range of not impairing the advantageous effects of the present disclosure. Further alternatively, there may be used concurrently an organic foam nucleating agent such as ADCA (azodicarbonamide), DPN (N,N'-dinitropentamethylenetetramine) or OBSH (4,4'-oxybisbenzenesulfonylhydrazide).

Alternatively, the foam molding composition of the present disclosure may further contain, other than the fluororesin (A) and the compound (B), conventionally well-known fillers in the range of not impairing the advantageous effects of the present disclosure.

Examples of the fillers include graphite, carbon fiber, coke, silica, zinc oxide, magnesium oxide, magnesium sulfate, tin oxide, antimony oxide, calcium carbonate, magnesium carbonate, magnesium hydroxide, glass, talc, mica, aluminum nitride, calcium phosphate, sericite, diatomaceous earth, silicon nitride, fine silica, fumed silica, alumina, zirconia, quartz powder, kaolin, bentonite and titanium oxide. The shape of the filler is not limited, and includes fibrous, needle, columnar, whisker, flat plate, lamellar, flake, balloon, porous, chopped fiber, powdery, granular bead shapes and the like. Here, the fillers are different from the boron nitride.

Alternatively, the foam molding composition of the present disclosure may further contain a thermoplastic resin other than the above fluororesin. Examples of the thermoplastic resin other than the fluororesin include general-purpose resins such as polyethylene resins, polypropylene resins, vinyl chloride resins and polystyrene resins; and engineering plastics such as nylon, polycarbonate, polyether ether ketone resins, polyphenylene sulfide resins, polyaryl ether ketone (PAEK), polyether ketone ketone (PEKK), polyether ketone (PEK), polyether ether ketone ketone (PEEKK), polyether sulfone (PES), liquid crystal polymers (LCP), polysulfone (PSF), amorphous polyarylate (PAR), polyether nitrile (PEN), thermoplastic polyimide (TPI), polyimide (PI), polyether imide (PEI), polyamideimide (PAI).

Alternatively, the foam molding composition of the present disclosure may further contain other components of additives and the like. Examples of the other components include fillers such as glass fiber, glass powder, asbestos fiber, cellulose fiber and carbon fiber, and reinforcing agents, stabilizers, lubricants, pigments, flame retarders and other additives.

The foam molding composition of the present disclosure can also be obtained, for example, by a production method (hereinafter, referred to as "production method of the composition") including a mixing step of mixing the fluororesin (A) and the compound (B) and as required, a boron nitride, fillers, additives and the like to be added to thereby obtain a mixture.

A method of the mixing can use a conventionally well-known method or the like, but a mixing method in which the compound (B) is hardly aggregated is preferable.

The mixing method includes methods using a Henschel mixer, a ribbon mixer, a V blender, a ball mill or the like. The method also includes, for example, a method of mixing by melt kneading.

Alternatively, a production method of the foam molding composition of the present disclosure may be a method including a kneading step of kneading the mixture obtained in the above mixing step. By the kneading, pellets can be obtained. The kneading can be carried out, for example, by a method using a conventionally well-known melt kneader such as a single-screw extruder or a twin-screw extruder.

Alternatively, a production method of the foam molding composition may be a method including a step of subjecting a fluororesin to a fluorination treatment. The fluorination treatment can use the above-mentioned method. The fluorination treatment may be carried out, for example, by bringing pellets obtained in the above kneading into contact with the above-mentioned fluorine-containing compound.

Each component of the thermoplastic resin other than the fluororesin; the boron nitride; the polyatomic anion-containing inorganic salt; the fillers; the other additives; and the like as already described as being capable of being contained in the foam molding composition of the present disclosure, can appropriately be added in each step of the production method of the foam molding composition according to the property and the like of the each component. Alternatively, a fluororesin and a boron nitride may further be added.

The foam molding composition of the present disclosure can suitably be used as a foaming composition. Further, the foam molding composition can suitably be used as a composition for electric wire covering to form a covering material of an electric wire.

The foam molding composition of the present disclosure exhibits good foamability without using any fluorine-based surfactant. As conventional fluorine-based surfactants, fluorine-based low-molecular weight compounds have been used generally. When a resin contains much of such a fluorine-containing low-molecular weight compound, the resin in a melted state in molding is plasticized, posing such a problem that many sparks are generated. The foam molding composition of the present disclosure, since being substantially free from such a fluorine-based low-molecular weight compound, poses no above-mentioned problem, and can provide the foam molded body excellent in the surface condition.

The fluorine-based low-molecular weight compound is not limited, and examples thereof include perfluoroalkyl acids and perfluorosulfonic acids, and specifically include C₈F₁₇COOH and salts thereof, C₇F₁₅COOH and salts thereof, C₆F₁₃COOH and salts thereof, C₈F₁₇SO₃H and salts thereof, C₆F₁₃SO₃H and salts thereof, C₄F₉SO₃H and salts thereof, C₈F₁₇CH₂CH₂-SO₃H and salts thereof, C₆F₁₃CH₂CH₂-SO₃H and salts thereof, C₈F₁₇CH₂CH₂OH and C₆F₁₃CH₂CH₂OH, and more specifically include {F(CF₂)₆CH₂CH₂SO₃}₂Ba.

The content of the fluorine-based low-molecular weight compound can be analyzed by the following method:
Pellets of the foam molding composition are ground by freezing grinding; and the fabricated powder is dispersed in methanol and subjected to extraction with ultrasonication at 60°C for 2 hours. The extract is quantitatively determined by a liquid chromatograph-mass spectrometer (LC-MS/MS) and the quantitatively determined value is taken as the content.

A method for producing a foam molded body of the present disclosure comprises a step of foam molding the foam molding composition.

The method of foam molding the foam molding composition is not limited, and for example, a conventionally well-known method can be used; examples thereof include a method using a continuous gas injection method in which a gas is used in the fluororesin melted (melted resin) and the foam molding composition of the present disclosure is charged in a screw extruder designed for foaming operation.

The gas may be, for example, a gas such as chlorodifluoromethane, nitrogen or carbon dioxide, or a mixture thereof; the gas may be introduced as a pressurized gas in the melted resin in the extruder, or may be generated by mixing a chemical foaming agent in the melted resin. The gas is dissolved in the melted resin in the extruder.

The gas dissolved in the melted resin comes out from the melted material by sudden decline of the pressure of the melted material when the melted material comes out from an extrusion die. The extrudate extruded from the extruder is then cooled and solidified, for example, by a method in which the extrudate is introduced in water.

The foam molded body, since being obtained by foam molding the foam molding composition, is low in the dielectric constant, presents a stable capacitance and is low in the weight, and can provide the shape stable in the size including the wire diameter, the thickness and the like as a covering material described later.

The total volume of cells in the foam molded body can appropriately be regulated according to applications, for example, by regulation of the amount of the gas to be introduced in the extruder, and the like, or by selection of the kind of the gas to be dissolved.

The foam molded body is obtained as a molded body molded according to applications in extrusion from the extruder. The molding method is not limited as long as being thermal melt molding, and examples thereof include extrusion foam molding, injection foam molding and metal mold foam molding.

The shape of the foam molded body is not limited, and can be made into various shapes such as a covering material of the foamed electric wire, filament shapes such as a wire rod or the like, sheet, film, rod and pipe shapes. The foam molded body can be used, for example, as an electric insulating material, a heat insulating material, a sound insulating material, a lightweight structural material such as a floating material, a cushioning material such as a cushion, and the like. Further, the foam molded body can especially suitably be used as a covering material of the foamed electric wire.

The foam molded body to be obtained contains a melted and solidified body of the foam molding composition of the present disclosure and cells, and it is preferable that the cells are homogeneously distributed in the melted and solidified body. The average cell size of the cells is not limited, but is, for example, preferably 60 µm or smaller, and is preferably 0.1 µm or larger.

The foaming ratio of the foam molded body is not limited, but is preferably 20% or higher. The upper limit of the foaming ratio is not limited, but is, for example, 80%.

Also the point that the surface of the foam molded body of the present disclosure is smoother than that of conventional foam molded bodies containing a fluororesin is one of features of the foam molded body. Due to that the surface is smooth, the foam molded body can suitably be utilized for twin-ax cables and the like.

In the present disclosure, the surface of the foam molded body can be evaluated by scanning the surface by a bare hand and observing the degree of catching (protrusions) transmitted to the hand at this time. The electric wire surface can also be evaluated numerically, as described later, by measuring an electric wire surface by a laser microscope, carrying out correction in a specified electric wire region of obtained image data by using quadratic curved surface correction as surface shape correction, and thereafter calculating the surface roughness of 500 × 2,000 µm. The surface roughness is preferably smaller than 10.0 µm and more preferably smaller than 7.0 µm. The surface roughness is still more preferably smaller than 5.0 µm. The lower limit of the surface roughness may be 0.001 µm or larger. In twin-ax cables and the like, making the foam molded body to have a two-layer structure of foam (inner side)/skin (outer side) is preferable in that the surface roughness can be controlled to more preferable values.

A method for producing an electric wire of the present disclosure includes a step of covering a core wire with the foam molding composition to thereby obtain the electric wire. By using the foam molding composition, there can be formed a foamed electric wire equipped with a covering material having fine and uniform cells. It is preferable that the step of obtaining the electric wire involves foam molding the foam molding composition.

The electric wire obtained by the production method of the electric wire is composed of the covering material formed from the foam molding composition and the core wire. The electric wire obtained by covering the core wire with the foam molding composition is also one aspect in the present disclosure.

The covering material, since being obtained by covering the core wire with the foam molding composition, has fine and uniform cells. The covering material is low in the dielectric constant, presents a stable capacitance and is low in the weight, and can provide the shape stable in the size including the wire diameter, the thickness and the like.

Further, the covering material has the smooth surface as in the above foam molded body, and exhibits similar physical properties.

The electric wire can be fabricated by a conventionally similar method, except for covering the core wire with the above-mentioned foam molding composition, and can be produced, for example, by using extrusion foam molding. The preferable extrusion condition can appropriately be selected according to the formulation of the composition to be used and the size of the electric wire to be used.

Examples of a method of covering the core wire with the foam molding composition include a method in which the foam molding composition of the present disclosure is charged in a screw extruder designed for foaming operation, while a gas soluble to the fluororesin melted (melted resin) is used and a continuous gas injection method is used. The gas may be the same gas as the gas to be used in the production method of the foam molded body.

The obtained covering material contains a melted and solidified body of the foam molding composition of the present disclosure and cells, and it is preferable that the cells are distributed homogeneously in the melted and solidified body.

The average cell size of the cells is not limited, but is, in observation of a cut surface perpendicular to the lengthwise direction, for example, preferably 200 µm or smaller, more preferably 100 µm or smaller, still more preferably 50 µm or smaller, further still more preferably 40 µm or smaller, especially preferably 30 µm or smaller and particularly preferably 20 µm or smaller. Then, the average cell size is preferably 0.1 µm or larger, more preferably 0.5 µm or larger and still more preferably 1 µm or larger. In order to make the cell size small, however, much of an additive needs to be added, and since too much thereof facilitates generation of sparks, the average cell size of the electric wire for an in-vehicle network is preferably 20 to 40 µm and especially preferably 25 to 35 µm.

Such a structure of the covering material is obtained due to a combination of the fluororesin (A) and a specific compound (B) in the foam molding composition of the present disclosure.

The average cell size is a value determined by taking an image of a covering material cross section by a scanning electron microscope (SEM), calculating the diameter of each cell by image processing and averaging the diameters.

The foaming ratio of the covering material is preferably 20% or higher, more preferably 25% or higher and still more preferably 30% or higher. The foaming ratio is especially preferably 40% or higher. The upper limit is not limited, but is, for example, 90%. The upper limit of the foaming ratio may be 80%, or may be 60%. In the electric wire for an in-vehicle network, in consideration of collapse during twisting, the foaming ratio is preferably 40% or higher and 60% or lower.

The foaming ratio is a value determined as ((a specific gravity of a fluororesin - a specific gravity of a foam)/the specific gravity of the fluororesin) × 100. The foaming ratio can appropriately be regulated according to applications, for example, by regulation of the amount of the gas to be introduced in the extruder, and the like, or by selection of the kind of the gas to be dissolved.

The number of sparks per 3,500 m of the covering material is preferably less than 5, more preferably less than 3 and still more preferably less than 1.

The number of sparks is a value obtained by measurement at a voltage of 1,500 V by a Beta LaserMike Sparktester HFS1220.

A material of the core wire may be, for example, a metal conductor material such as copper or aluminum, carbon, or the like. The material may be a single material, or may be a material plated with silver, tin or the like.

It is preferable that the core wire is one having a diameter of 0.02 to 3 **mm.** The diameter of the core wire is more preferably 0.04 mm or larger, still more preferably 0.05 mm or larger and especially preferably 0.1 mm or larger. It is more preferable that the diameter of the core wire is 2 mm or smaller. The core wire may be a solid wire, or may also be a twisted wire in which a plurality of core wires are twisted.

The shape of the core wire is not limited, and includes flat shapes and rectangular shapes.

It is preferable that the electric wire has a thickness of the covering material of 0.01 to 3.0 mm. It is also preferable that the thickness of the covering material is 2.0 mm or smaller.

Specific examples of the core wire may be AWG (American wire gauge)-46 (solid copper wire having a diameter of 40 micrometer), AWG-42 (solid copper wire having a diameter of 64 micrometer), AWG-36 (solid copper wire having a diameter of 127 micrometer or wire having a total size of 153 micrometer in diameter of 7 stranded copper wires having a diameter of 51 micrometer), AWG-30 (solid copper wire having a diameter of 254 micrometer or wire having a total size of 306 micrometer in diameter of 7 stranded copper wires having a diameter of 102 micrometer), AWG-27 (solid copper wire having a diameter of 361 micrometer), AWG-26 (solid copper wire having a diameter of 404 micrometer), AWG-24 (solid copper wire having a diameter of 510 micrometer), or AWG-22 (solid copper wire having a diameter of 635 micrometer).

The foamed electric wire is composed of the core wire and the covering material covering the core wire. The foamed electric wire can be used as cables which connect computers and their peripheral equipment, cables which communicate high capacities of images and sounds at high speed, cables which connect between servers of data centers, for example, LAN cables, USB cables, lightning cables, Thunderbolt cables, cables for CATV, HDMI(R) cables and QSFP cables, electric wires for aerospace, underground transmission cables, submarine power cables, high-tension cables, superconducting cables, wrapping electric wires, electric wires for cars, wire harnesses and electrical wiring, electric wires for robots and FA, electric wires for OA equipment, electric wires for information devices (optical fiber cables, audio cables and the like), internal wiring for communication base stations, large-current internal wiring (inverters, power conditioners, battery systems, and the like), internal wiring for electronic devices, wiring for small electronic devices and mobile devices, wiring for moving parts, internal wiring for electric devices, internal wiring for measurement apparatuses, power cables (for construction, wind/solar power generation, and the like), cables for control and instrumentation wiring, cables for motors, and the like.

The electric wire may also have a two-layer structure (skin-foam) in which a non-foamed layer is inserted between the core wire and the covering material, a two-layer structure (foam-skin) in which a non-foamed layer is coated as an outer layer, or a three-layer structure (skin-foam-skin) in which a non-foamed layer is coated as an outer layer of the skin-foam. In order to lower the surface roughness, a foam-skin or skin-foam-skin structure is preferable. The foam-skin structure is preferable because the facility can be simplified. The total thickness of the skin layer is preferably 200 µm or smaller, more preferably 100 µm or smaller, especially preferably 70 µm or smaller and most preferably 40 µm or smaller. Then, the thickness is preferably 1 µm or larger.

The non-foamed layer of the electric wire is not limited, and may be a resin layer composed of a resin such as a TFE/HFP-based copolymer, a TFE/PAVE copolymer, a TFE/ethylene-based copolymer, a vinylidene fluoridebased polymer, a polyolefin resin such as polyethylene [PE] or polyvinyl chloride [PVC].

Since the foam molding composition of the present disclosure is substantially free from fluorine-based low-molecular weight compound, the above-mentioned foam molded body and electric wire also are substantially free from fluorine-based low-molecular weight compound.

The content of the fluorine-based low-molecular weight compound in the foam molded body and the electric wire can also be analyzed as in the above-mentioned case of the foam molding composition.

The present disclosure is also foamed electric wires cited below.
(1) A foamed electric wire characterized in having a core wire and a fluororesin layer or a fluororesin composition layer covering the core wire, wherein the fluororesin layer or the fluororesin composition layer contains cells, wherein the average aspect ratio of the cells is 1.9 or lower, in observation of a cut surface parallel to the lengthwise direction of the foamed electric wire.
(2) A foamed electric wire characterized in having a core wire and a fluororesin layer or a fluororesin composition layer covering the core wire, wherein the fluororesin layer or the fluororesin composition layer contains cells, wherein the presence proportion of cells having an aspect ratio of 3 or higher is 13% or lower with respect to the total amount of cells measured in observation of the cut surface parallel to the lengthwise direction of the foamed electric wire, in observation of a cut surface parallel to the lengthwise direction of the foamed electric wire.
(3) A foamed electric wire characterized in having a core wire and a fluororesin layer or a fluororesin composition layer covering the core wire, wherein the fluororesin layer or the fluororesin composition layer contains cells, wherein the standard deviation of the aspect ratios of the cells is 1.3 or lower, in observation of a cut surface parallel to the lengthwise direction of the foamed electric wire.
(4) A foamed electric wire characterized in having a core wire and a fluororesin layer or a fluororesin composition layer covering the core wire, wherein the fluororesin layer or the fluororesin composition layer contains cells,
   wherein the foaming ratio is 20% or higher and the surface roughness is smaller than 5.0 µm.
(5) A foamed electric wire having a core wire and a fluororesin layer or a fluororesin composition layer covering the core wire, wherein the fluororesin layer or the fluororesin composition layer contains cells, wherein, in observation of a cut surface perpendicular to the lengthwise direction of the foamed electric wire, the average cell size of the cells is 20 to 40 µm.
(6) A foamed electric wire for an in-vehicle network cable, having a core wire and a fluororesin layer or a fluororesin composition layer covering the core wire,
   wherein the fluororesin layer or the fluororesin composition layer has cells, and
   wherein the electric wire has a foam (inner side)/skin (outer side) structure.

The cells contained in the fluororesin layer or the fluororesin composition layer satisfying these physical properties indicates that these layers contain fine and uniform cells and it can be said that the dielectric constant is low and a stable capacitance is presented.

These fluororesin layer and fluororesin composition layer can be formed, for example, from the foam molding composition of the present disclosure.

The average aspect ratio of the cells is 1.9 or lower. The average aspect ratio can be measured by taking an image of a cut surface parallel to the lengthwise direction of the covering material by a scanning electron microscope (SEM), determining an aspect ratio of each cell by calculating the ratio of the major axis to the minor axis (major axis/minor axis) from the major axis and the minor axis of each cell obtained by image processing, and averaging the determined aspect ratios. The average aspect ratio is preferably 1.8 or lower and more preferably 1.6 or lower. Then, it is preferable that the average aspect ratio is 1.0 or higher.

The presence proportion of cells having an aspect ratio of 3 or higher is 13% or lower with respect to the total amount of cells measured in observation of a cut surface parallel to the lengthwise direction. The presence proportion is obtained by calculating the proportion of cells having an aspect ratio of 3 or higher determined by taking an image of a cut surface parallel to the lengthwise direction of the covering material by a scanning electron microscope (SEM), and calculating the ratio of the major axis to the minor axis (major axis/minor axis) from the major axis and the minor axis of each cell obtained by image processing.

The presence proportion of cells having an aspect ratio of 3 or higher is preferably 6% or lower and more preferably 3% or lower. Then, it is preferable that the proportion is 0.01% or higher.

The standard deviation of the aspect ratios of the cells is 1.3 or lower. The standard deviation is calculated as a standard deviation of the aspect ratios determined by taking an image of a cut surface parallel to the lengthwise direction of the covering material by a scanning electron microscope (SEM), and calculating the ratio of the major axis to the minor axis (major axis/minor axis) from the major axis and the minor axis of the each cell obtained by image processing. The standard deviation of the aspect ratios is preferably 1.1 or lower, more preferably 0.8 or lower and more preferably 0.6 or lower. Then, it is preferable that the standard deviation is 0.01 or higher.

It is preferable that the foaming ratio is 20% or higher. The foaming ratio is a value determined as ((a specific gravity of the fluororesin - a specific gravity of the fluororesin layer or fluororesin composition layer)/the specific gravity of the fluororesin) × 100.

The foaming ratio is preferably 25% or higher and more preferably 30% or higher. The foaming ratio is still more preferably 40% or higher.

The surface roughness is smaller than 5.0 µm. The surface roughness is a value obtained by measuring an electric wire surface by a laser microscope, manufactured by Keyence Corp., carrying out correction in a specified electric wire region of obtained image data by using quadratic curved surface correction as surface shape correction, and thereafter, calculating the surface roughness of 500 × 200 µm.

The surface roughness is most preferably 3.0 µm or smaller.

In observation of a cut surface perpendicular to the lengthwise direction, the average cell size of the cells is 20 to 40 µm and preferably 25 to 35 µm. The average cell size is a value determined by taking an image of a covering material cross section by a scanning electron microscope (SEM), calculating the diameter of each cell by image processing and averaging the diameters.

In the above-mentioned foamed electric wire, in observation of a cut surface perpendicular to the lengthwise direction, the average cell size of the cells is preferably 50 µm or smaller. The average cell size is more preferably 40 µm or smaller and still more preferably 35 µm or smaller. Then, the average cell size is preferably 0.1 µm or larger, more preferably 20 µm or larger and still more preferably 25 µm or larger.

Further, cells having an average cell size of 50 µm or smaller accounts for preferably 90% or more and more preferably 95% or more.

The maximum cell size is preferably 150 µm or smaller and more preferably 100 µm or smaller.

Then, the number of cells present in a cut surface is, per unit area, preferably 1,500/mm² or smaller, more preferably 1,000/mm² or smaller and still more preferably 800/mm² or smaller.

In the above-mentioned foamed electric wire, the covering thickness of the fluororesin layer or the fluororesin composition layer is preferably 0.4 mm or smaller, more preferably 0.3 mm or smaller and still more preferably 0.25 mm or smaller. The covering thickness is a value determined as (an outer diameter of an electric wire covering - a diameter of a core wire)/2.

In the above-mentioned foamed electric wire, the core wire diameter is preferably 0.5 mm or smaller, more preferably 0.4 mm or smaller and more preferably 0.3 mm or smaller.

A method for producing the above-mentioned foamed electric wire is not limited, but it is preferable that the foamed electric wire is produce by a method using the above-mentioned foam molding composition of the present disclosure. That is, the use of the foam molding composition of the present disclosure enables the foamed electric wire having the above-mentioned performance to be obtained, and thereby, various performance features can be provided.

The above-mentioned method for producing the foamed electric wire of the present disclosure can be carried out by the step as described above.

The foam molding composition of the present disclosure is used for a covering of the electric wire for an in-vehicle network cable.

The electric wire for an in-vehicle network cable can suitably be used in from large commercial vehicles to private cars.

The in-vehicle network cable of the present disclosure has a twisted pair cable having a pair of electric wires mutually twisted, and it is preferable that at least one of the pair of electric wires is the foamed electric wire for an in-vehicle network cable of the present disclosure. Then, it is better, from the viewpoint of maintaining electric properties, that the collapse after twisting of the twisted electric wires is smaller, and the deformation rate is preferably 20% or lower.

The in-vehicle network cable of the present disclosure comprises the above-mentioned foamed electric wire for an in-vehicle network cable of the present disclosure. The present disclosure provides also use of the in-vehicle network cable in in-vehicle networks.

The form of the in-vehicle network cable of the present disclosure includes coaxial cables, twisted pair cables, two-parallel-wire cables, four-parallel-wire cables and eight-parallel-wire cables.

Examples of the coaxial cables include cables in which an outer conductor layer (for example, metal mesh) composed of a metal is formed on the periphery of the above-mentioned foamed electric wire for an in-vehicle network cable of the present disclosure, and a resin layer (sheath layer) is formed on the periphery of the outer conductor layer. The resin layer (sheath layer) is not limited, but may be a layer composed of a fluorine-containing copolymer having a TFE unit such as a TFE/HFP-based copolymer or a TFE/PAVE-based copolymer, a polyvinyl chloride [PVC], or a polyethylene. The outer conductor layer and the resin layer (sheath layer) can be covered by a conventionally well-known method.

The in-vehicle network cable of the present disclosure has a twisted pair cable having a pair of electric wires mutually twisted, and it is preferable that at least one of the pair of electric wires is the foamed electric wire for an in-vehicle network cable of the present disclosure. Use of the twisted pair cable makes the cable to be less susceptible to the influence of noises, so the cable is especially suitable as an in-vehicle network cable where large noises are easily generated.

The in-vehicle network cable of the present disclosure may be one having one pair of twisted pair cables, or one having two or more pairs of twisted pair cables. The number of the twisted pair cables is preferably 1 to 4, more preferably 1 or 2 and still more preferably 1.

It is preferable that the in-vehicle network cable of the present disclosure has a jacket surrounding the periphery of the twisted pair cables. The material of the jacket includes resins such as fluorine-containing copolymers having a TFE unit such as a TFE/HFP-based copolymer or a TFE/PAVE-based copolymer, polyvinyl chloride [PVC], and polyethylene, but is not limited thereto. The thickness of the jacket is not limited, and may suitably be set according to purposes.

The in-vehicle network cable of the present disclosure may have an outer conductor layer (for example, metal mesh or aluminum foil) composed of a metal on the periphery of the twisted pair cable. The outer conductor layer functions as a shield, more improving the stability. However, from the viewpoint of lightweightness and foldability, no shield is preferable.

The in-vehicle network cable of the present disclosure is preferably an in-vehicle Ethernet cable, and is, specifically, more preferably a network cable of 100BASE-T1 or 1000BASE-T1.

The present disclosure provides also an in-vehicle network system equipped with an in-vehicle computer and the in-vehicle network cable of the present disclosure connected to the in-vehicle computer.

The in-vehicle network system of the present disclosure suffices if being equipped with at least one in-vehicle computer, and may be equipped with two or more in-vehicle computers. The in-vehicle computer and the in-vehicle network cable of the present disclosure may be connected directly to each other, or may be connected indirectly. The in-vehicle network cable of the present disclosure and the in-vehicle computer may be connected, for example, through a hub, a router or the like.

The in-vehicle computer is not limited as long as being a computer to be mounted on vehicles, and examples thereof include in-vehicle electronic control units (in-vehicle ECU) and in-vehicle telematic control units (in-vehicle TCU).

The in-vehicle network system of the present disclosure may be one equipped with a first in-vehicle computer, a second in-vehicle computer and the in-vehicle network cable of the present disclosure connecting the first in-vehicle computer and the second in-vehicle computer.

### Examples

Hereinafter, the present disclosure will be described specifically based on Examples. Unless otherwise stated in the following Examples, "parts" and "%" represent "parts by mass" and "% by mass", respectively.

### Production Example 1 Preparation of pellets A

Pellets A were obtained by the same method as the method described in Example 1 of Japanese Patent Laid-Open No. 2017-128119. The formulation of the obtained pellets was a TFE/HFP/PPVE copolymer in which TFE/HFP/PPVE = 87.8/11.2/1.0 (in mass ratio); the melting point was 255°C; the melt flow rate (MFR) was 37 g/10 min; and the total number of unstable terminal groups and a -CF₂H terminal group was 0 per 1 × 10⁶ carbon atoms.

### Production Example 3 Preparation of pellets B

Pellets B were obtained by subjecting, to a fluorination treatment, pellets produced by the same method as in Synthesis Example 1 of WO2005-052015. The formulation of the obtained pellets was a TFE/PPVE copolymer in which TFE/PPVE = 94.9/5.1 (in mass ratio); the melting point was 255°C; the melt flow rate (MFR) was 63 g/10 min; and the total number of unstable terminal groups and a -CF₂H terminal group was 0 per 1 × 10⁶ carbon atoms.

### Examples 1 to 5 and Comparative Examples 1 to 3

In each Example, molding of a foamed electric wire was carried out by adding an additive in a predetermined amount to pellets obtained in the above, and extruding a foam molding composition prepared by melt kneading the resultant pellets by an extruder set at extruder temperatures indicated in Table 1. The molding was carried out by using a 22AWG copper wire (OD: 0.64 mm) as the core wire, and adjusting the extrusion temperature, the flow volume (pressure) of a nitrogen gas to be introduced, the extrusion speed and the take-over speed so that the outer diameter after covering became 1.4 mm; the wall thickness, 0.38 mm; the skin, 25 µm; and the electrostatic capacity, 40 pF/ft (corresponding to a foaming ratio of 48%). The electric wire extrusion condition is shown in Table 2.

The molding was carried out continuously for 1 hour, and for 3,500 m where the molding remained stable, sparking-out was observed. Further, for the obtained foamed electric wire, the foaming ratio, the average aspect ratio, the average cell size and the surface roughness were measured by the following methods. Then, collapse of the electric wire during twinning was evaluated.

For the obtained electric wires, the results of evaluations of each characteristic are shown in Tables 3 and 4.

**[Table 1]**

| Molding temperature (°C) | |
|---|---|
| Foam | |
| C1 | 280 |
| C2 | 320 |
| C3 | 335 |
| C4 | 345 |
| C5 | 350 |
| AD | 350 |
| Die | 290 |

| Skin | |
|---|---|
| C1 | 310 |
| C2 | 325 |
| C3 | 330 |
| AD | 340 |

**[Table 2]**

| | |
|---|---|
| Extruder size | foam: 35 mmϕ, skin: 20 mmϕ |
| Die size | 4 mm |
| Tip size | 2 mm |
| Screw rotation speed | foam: 8 rpm, skin: 7 rpm |
| Core wire (mm) | 0.64 mm |
| Nitrogen pressure (MPa) | 7-11 Mpa |
| Molding speed (m/mim) | 45-50 |

Additives in Tables 3 and 4 were as follows.
NA11 (crystal nucleating agent, ADK STAB NA-11,
manufactured by Adeka Corp.): 2,2'-methylenebis(4,6-di-t-butylphenyl) sodium phosphate
C4SBa salt: (C₄F₉SO₃)₂Ba
Gelol MD (manufactured by New Japan Chemical Co. Ltd.): bis(4-methylbenzylidene) sorbitol

Various properties in the present description were measured by the following methods.

### (Measurement of the number of unstable terminal groups)

Pellets were rolled by a hydraulic press to fabricate a film having a thickness of approximately 0.3 mm, and the film was analyzed by an FT-IR Spectrophotometer 1760X (manufactured by PerkinElmer, Inc.).

There was acquired a difference spectrum between the film and a reference sample (sample fluorinated so fully that any difference was substantially no longer observed in the spectrum) and the absorbance of each peak was read and the number of unstable terminal groups per 1 × 10⁶ carbon atoms was calculated according to the following expression. The number of an unstable terminal group per 1 × 106 carbon atoms = (I × K)/t wherein I: absorbance, K: correction factor, t: film thickness (unit: mm).

The correction factor (K) of each unstable terminal group was as follows.
- COF (1,884 cm⁻¹) ··· 405
- COOH (1,813 cm⁻¹, 1,775 cm⁻¹) ··· 455
- COOCH₃ (1,795 cm⁻¹) ··· 355
- CONH₂ (3,438 cm⁻¹) ··· 480
- CH₂OH (3,648 cm⁻¹) ··· 2,325

### (Measurement of the number of a -CF₂H terminal group)

A ¹⁹F-NMR measurement was carried out by using a nuclear magnetic resonance instrument AC300 (manufactured by Bruker Biospin GmbH) at a measurement temperature of (the melting point of a fluororesin + 20)°C, and the number thereof was determined from an integrated value of a peak derived from the presence of the -CF₂H group and integrated values of other peaks.

### (Melting point)

The melting point of a fluororesin was defined as a temperature corresponding to a peak when the measurement was carried out at a temperature-increasing rate of 10°C/min by using an RDC220 (manufactured by Seiko Instruments Inc.).

### (MFR)

The MFR of a fluororesin was measured according to ASTM D1238 by using a KAYENESS Melt Indexer Series 4000 (manufactured by Yasuda Seiki Seisakusho, Ltd.) and by using a die of 2.1 mm in diameter and 8 mm in length, the MFR was defined as a value by the measurement at 372°C and at a load of 5 kg.

### (Outer diameter)

The outer diameter of an electric wire was measured by using a LASER MICRO DIAMETER LDM-303H-XY (manufactured by Takikawa Engineering Co., Ltd.).

### (Electrostatic capacity)

The capacitance was measured by using a CAPAC300 19C (manufactured by Zumbach Electronic AG).

### (The number of sparks)

The number of sparks per 3,500 m was measured by using a Beta LaserMike Sparktester HFS1220 at a voltage of 1,500 V.

### (Foaming ratio)

The foaming ratio was determined as ((a specific gravity of a fluororesin - a specific gravity of a foam)/the specific gravity of the fluororesin) × 100.

### (Average cell size)

A SEM image of an electric wire cross-section perpendicular to the lengthwise direction was taken; and the diameter of each cell was calculated by image processing and by averaging the diameters, the average cell size was determined.

### (Surface roughness)

The electric wire surface was measured by a laser microscope, manufactured by Keyence Corp.; there was carried out correction in a specified electric wire region of obtained image data by using quadratic curved surface correction as surface shape correction; and thereafter, the surface roughness of 500 × 2,000 µm was calculated.

### (Average aspect ratio of cells)

The average aspect ratio of the cells was measured by taking an image of a cut surface parallel to the lengthwise direction of the covering material by a scanning electron microscope (SEM), determining an aspect ratio of each cell by calculating the ratio of the major axis to the minor axis (major axis/minor axis) from the major axis and the minor axis of each cell obtained by image processing, and averaging the determined aspect ratios.

### (Collapse of an electric wire during twinning)

Two electric wires were twisted into a twisted pair under the following condition by an electric wire twisting machine. The proportion of the deformation to the initial diameter of the electric wires was taken as a deformation rate, and the case where the deformation rate was 20% or lower was taken as no collapse.
Linear speed: 19 m/min
Twisting number: 3,000 twistings/min
Lay length: 8.5 mm
Deformation rate: (a deformation from the electric wire diameter / an initial electric wire diameter) × 100(%)

**[Table 3]**

| | Example 1 | Example 2 | Example 3 | Example 4 | Example 5 |
|---|---|---|---|---|---|
| Resin | A | B | B | B | B |
| Additive | Na11 | NA11 | Na11 | Bisphenol phosphoric diester Ba salt | NA11 |
| Concentration of Additive (%) | 1.5 | 1.0 | 1.5 | 1.0 | 2.0 |
| Melting point of Additive (°C) | >400 | >400 | >400 | >400 | >400 |
| Pyrolysis temperature of Additive (°C) | 421 | 421 | 421 | 362 | 421 |
| SP value of Additive | 10.3 | 10.3 | 10.3 | 10.3 | 10.3 |
| Outer diameter (mm) | 1.4 | 1.4 | 1.4 | 1.4 | 1.4 |
| Electrostatic capacity (pF/m) | 40.5 | 40 | 40 | 40.5 | 40.5 |
| Number of sparks generated (number/1,000 m) | 0 | 0 | 0 | 0 | 3 |
| Foaming ratio (%) | 49 | 48 | 49 | 48 | 50 |
| Average cell size (µm) | 28 | 29 | 28 | 32 | 22 |
| Proportion of cells having average cell size of 50 µm or smaller (%) | 97 | 95 | 96 | 94 | 98 |
| Average aspect ratio | 1.2 | 1.3 | 1.2 | 1.3 | 1.2 |
| Standard deviation of aspect ratios | 0.4 | 0.5 | 0.4 | 0.5 | 0.4 |
| Presence proportion of cells having aspect ratio of 3 or higher (%) | 0.2 | 0.2 | 0.2 | 0.3 | 0.2 |
| Number of cells per unit area (number/mm²) | 418 | 423 | 415 | 395 | 495 |
| Surface roughness (µm) | 2 | 3 | 2 | 3 | 3 |
| Collapse of electric wire during twinning | absent | absent | absent | absent | absent |

**[Table 4]**

| | Comparative Example 1 | Comparative Example 2 | Comparative Example 3 |
|---|---|---|---|
| Resin | B | B | B |
| Additive | Benzenephosphonic acid sodium salt | Gelol MD | C4SBa salt |
| Concentration of Additive (%) | 0.1 | 1.0 | 0.1 |
| Melting point of Additive (°C) | >400 | >400 | >400 |
| Pyrolysis temperature of Additive (°C) | 342 | 255 | 480 |
| SP value of Additive | 16.3 | 12.7 | 7.5 |
| Outer diameter (mm) | 1.4 | non-moldable | 1.4 |
| Electrostatic capacity (pF/m) | 40 | non-moldable | 39.5 |
| Number of sparks generated (number/1,000 m) | >10 | non-moldable | 3 |
| Foaming ratio (%) | 49 | non-moldable | 48 |
| Average cell size (µm) | 60 | Non-moldable | 42 |
| Proportion of cells having average cell size of 50 µm or smaller (%) | 25 | non-moldable | 65 |
| Average aspect ratio | 2.0 | non-moldable | 2.1 |
| Standard deviation of aspect ratios | 2 | - | 2.1 |
| Presence proportion of cells having aspect ratio of 3 or higher (%) | 14 | non-moldable | 15 |
| Number of cells per unit area (number/mm²) | 56 | non-moldable | 187 |
| Surface roughness (µm) | 5 | - | 5 |
| Collapse of electric wire during twinning | present | - | present |

The foamed electric wires obtained in Examples caused no collapse during twinning, and could suitably be used, in particular, as an electric wire for an in-vehicle network cable.

### Industrial Applicability

The foam molding composition of the present disclosure is suitable, in particular, as a material for forming a covering material of a foamed electric wire.

## Claims

1. A foam molding composition, being used for a covering of an electric wire for an in-vehicle network cable, the composition comprising a fluororesin (A), and a compound (B) having a pyrolysis temperature of 300°C or higher and a solubility parameter (SP value) of 8 to 15.

2. The foam molding composition according to claim 1, wherein the compound (B) is a compound comprising at least one partial structure selected from the group consisting of aromatic rings, phosphoric acid ester groups and amide groups.

3. The foam molding composition according to claim 2, wherein the compound (B) is a compound containing one or more C6-14 aromatic rings, or a salt thereof.

4. The foam molding composition according to claim 2, wherein the compound (B) is at least one compound selected from the group consisting of phosphoric acid esters and salts thereof, phosphoric acid ester complex compounds, and compounds having two or more amide groups.

5. The foam molding composition according to claim 3 or 4, wherein the salt of the compound (B) is an alkali metal or an alkaline earth metal.

6. The foam molding composition according to any one of claims 2 to 5, wherein the compound (B) is at least one of compounds represented by the following formulae (1), (2), (3) and (4): 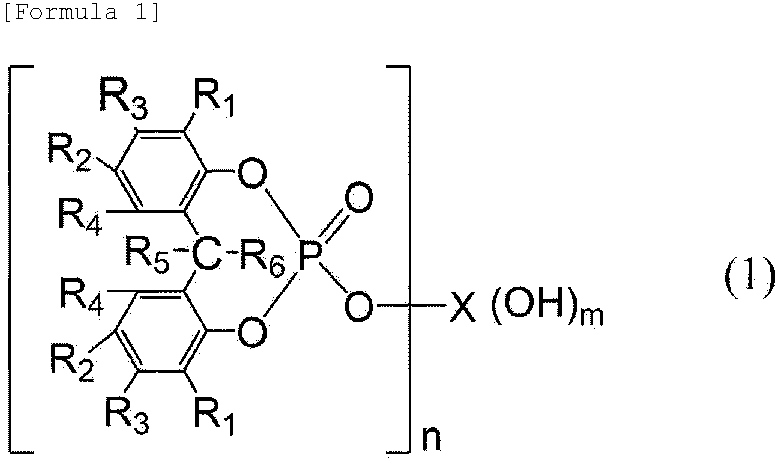 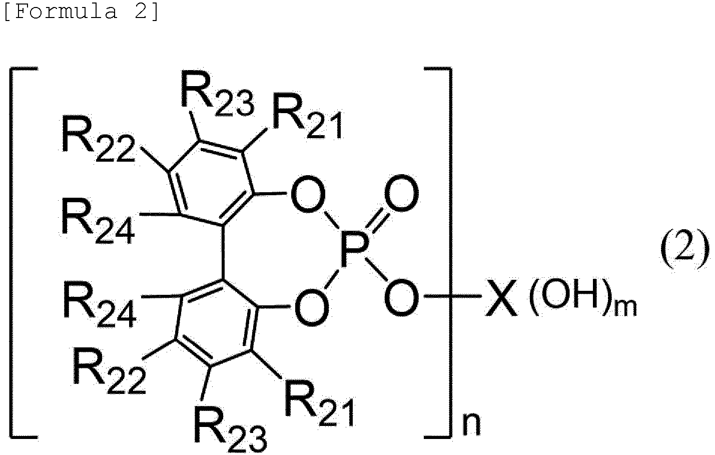 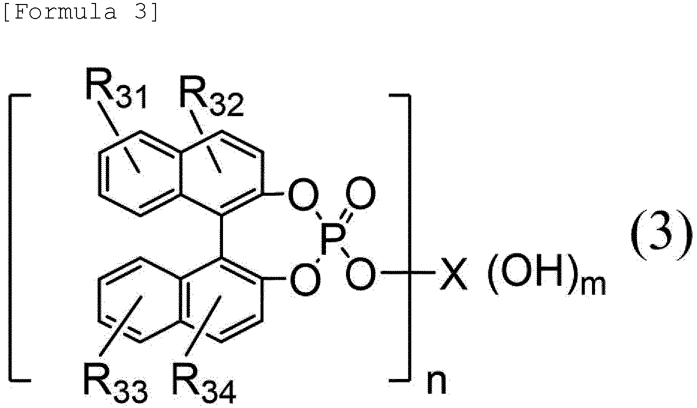 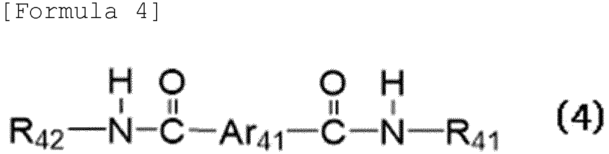 wherein R₁, R₂, R₃, R₄, R₂₁, R₂₂, R₂₃, R₂₄, R₃₁, R₃₂, R₃₃, R₃₄, R₄₁ and R₄₂ represent a hydrogen atom, an alkyl group or cycloalkyl group having 1 to 8 carbon atoms, or an aryl group, alkylaryl group or arylalkyl group having 6 to 12 carbon atoms; Ar₄₁ represents an aryl group; R₅ and R₆ represent a hydrogen atom or a methyl group; and n represents an integer of 1 or 2, m represents an integer of 0 to 2, and X represents a m+n-valent metal.

7. The foam molding composition according to claim 6, wherein R₁, R₂, R₂₁, R₂₂, R₃₁ and R₃₃ in the formula (1), the formula (2) and the formula (3) are an alkyl group having 1 to 8 carbon atoms.

8. The foam molding composition according to claim 6, wherein X in the formula (1), the formula (2) and the formula (3) is at least one of sodium, potassium, rubidium, calcium and barium.

9. The foam molding composition according to claim 6, wherein the compound (B) is an aromatic cyclic phosphoric acid ester salt represented by the formula (1).

10. The foam molding composition according to claim 9, wherein the compound (B) is 2,2'-methylenebis(4,6-di-t-butylphenyl) sodium phosphate.

11. The foam molding composition according to any one of claims 1 to 10, wherein the fluororesin (A) is a melt processable fluororesin.

12. The foam molding composition according to any one of claims 1 to 11, wherein the fluororesin (A) is at least one selected from the group consisting of tetrafluoroethylene/hexafluoropropylene-based copolymers, tetrafluoroethylene/perfluoro(alkyl vinyl ether) copolymers and tetrafluoroethylene/ethylene-based copolymers.

13. The foam molding composition according to any one of claims 1 to 12, wherein the fluororesin (A) is a fluororesin having been subjected to a fluorination treatment.

14. The foam molding composition according to any one of claims 1 to 13, wherein the foam molding composition is substantially free from fluorine-based low-molecular weight compound.

15. A foam molded body, being obtained from the foam molding composition according to any one of claims 1 to 14.

16. The foam molded body according to claim 15, wherein the foam molded body is substantially free from fluorine-based low-molecular weight compound.

17. A foamed electric wire for an in-vehicle network cable, comprising a core wire and a covering material covering the core wire and obtained from the foam molding composition according to any one of claims 1 to 14.

18. The foamed electric wire for an in-vehicle network cable according to claim 17, wherein the foamed electric wire is substantially free from fluorine-based low-molecular weight compound.

19. A foamed electric wire for an in-vehicle network cable, comprising a core wire, and a fluororesin layer or a fluororesin composition layer covering the core wire,
wherein the fluororesin layer or the fluororesin composition layer contains cells, and
wherein, in observation of a cut surface perpendicular to the lengthwise direction of the foamed electric wire, an average cell size of the cells is 20 to 40 µm.

20. A foamed electric wire for an in-vehicle network cable, comprising a core wire, and a fluororesin layer or a fluororesin composition layer covering the core wire,
wherein the fluororesin layer or the fluororesin composition layer contains cells, and
wherein, in observation of a cut surface parallel to the lengthwise direction of the foamed electric wire, an average aspect ratio of the cells is 1.9 or lower.

21. A foamed electric wire for an in-vehicle network cable, comprising a core wire, and a fluororesin layer or a fluororesin composition layer covering the core wire,
wherein the fluororesin layer or the fluororesin composition layer contains cells, and
wherein, in observation of a cut surface parallel to the lengthwise direction of the foamed electric wire, a presence proportion of cells having an aspect ratio of 3 or higher is 13% or lower with respect to a total amount of the cells measured in the observation of the cut surface parallel to the lengthwise direction of the foamed electric wire.

22. A foamed electric wire for an in-vehicle network cable, comprising a core wire, and a fluororesin layer or a fluororesin composition layer covering the core wire,
wherein the fluororesin layer or the fluororesin composition layer contains cells, and
wherein, in observation of a cut surface parallel to the lengthwise direction of the foamed electric wire, a standard deviation of aspect ratios of the cells is 1.3 or lower.

23. A foamed electric wire for an in-vehicle network cable, comprising a core wire, and a fluororesin layer or a fluororesin composition layer covering the core wire,
wherein the fluororesin layer or the fluororesin composition layer contains cells, and
wherein a foaming ratio is 20% or higher, and a surface roughness is smaller than 5.0 µm.

24. A foamed electric wire for an in-vehicle network cable, comprising a core wire, and a fluororesin layer or a fluororesin composition layer covering the core wire,
wherein the fluororesin layer or the fluororesin composition layer contains cells, and
wherein the electric wire has a foam (inner side)/skin (outer side) structure.

25. A method for producing a foam molded body, comprising a step of foam molding the foam molding composition according to any one of claims 1 to 14.

26. A method for producing an electric wire, comprising a step of covering a core wire with the foam molding composition according to any one of claims 1 to 14.

27. An in-vehicle network cable, comprising the foamed electric wire for an in-vehicle network cable according to any one of claims 17 to 24.

28. The in-vehicle network cable according to claim 27, wherein the cable comprises a twisted pair cable having a pair of electric wires mutually twisted, and at least one of the pair of electric wires is the foamed electric wire for an in-vehicle network cable according to any one of claims 17 to 24.

29. The in-vehicle network cable according to claim 28, wherein in the twisted pair cable, a deformation rate of the foamed electric wire after twisting is 20% or lower.
